Europäisches Patentamt

European Patent Office

Office européen des brevets

(19)

(11) Numéro de publication : **0 136 740 B2**

(12) **NOUVEAU FASCICULE DE BREVET EUROPEEN**

(45) Date de publication du nouveau fascicule du brevet : **18.09.91 Bulletin 91/38**

(51) Int. Cl.⁵ : **H02K 15/02**

(21) Numéro de dépôt : **84201144.7**

(22) Date de dépôt : **06.08.84**

(54) Procédé de fabrication de paquets de tôles magnétiques ou autres de forme annulaire et installation de mise en oeuvre.

(30) Priorité : **09.08.83 FR 8313104**

(43) Date de publication de la demande : **10.04.85 Bulletin 85/15**

(45) Mention de la délivrance du brevet : **14.10.87 Bulletin 87/42**

(45) Mention de la décision concernant l'opposition : **18.09.91 Bulletin 91/38**

(84) Etats contractants désignés : **CH DE FR GB IT LI**

(56) Documents cités : **EP-A- 0 084 568 DE-A- 2 631 188**

(56) Documents cités : **FR-A- 1 335 212 FR-A- 2 487 597 GB-A- 1 110 594 PATENTS ABSTRACTS OF JAPAN, vol. 2, no. 96, 11 août 1978, page 4636E78**

(73) Titulaire : **Firma R. BOURGEOIS Usine du Valbois 32, rue de Trépillot F-25002 Besancon (FR)**

(72) Inventeur : **Bourgeois, Raymond François Alain La Tour de Scay F-25640 Roulans (FR)**

(74) Mandataire : **Mabut, Marie-France c/o BUGNION S.A. Conseils en Propriété Industrielle Case Postale 375 10, route de Florissant CH-1211 Genève 12 - Champel (CH)**

EP 0 136 740 B2

## Description

La présente invention concerne un procédé de fabrication de paquets de tôles magnétiques ou autres de forme annulaire pour petites et moyennes machines électriques, en particulier des alternateurs pour véhicules à moteur, à partir de tôles étampées, selon le préambule de la revendication 1.

L'invention concerne également une installation de mise on oeuvre du procédé.

Le document FR-A-2 487 597 décrit un dispositif de mise en paquets pour tôles-dynamo subdivisées en segments, un ou plusieurs postes d'alimentation automatique I, II, III, pour les segments de couronne sont associés à une table tournante, dont le plateau 24 est réalisé avec des butées d'empilage 18. Un servo-moteur électrique 15 est prévu pour le mouvement pas à pas de la table tournante. Il est prévu un dispositif de commande numérique par ordinateur, programmable librement à terminal à écran d'affichage, dans lequel sont introduits le nombre des segments de couronne pour 360° et la grandeur du recouvrement.

Dans ce dispositif connu, chaque poste d'alimentation est constitué d'un magasin à alternance pour les segments de tôle, d'un transporteur formé par un tourniquet avec quatre bras qui amènent par rotation pas à pas des segments l'un après l'autre au dessus du plateau tournant par l'intermédiaire des aimants qui tiennent les segments, ainsi que d'un dispositif d'alignement des segments situé au dessus de la trajectoire des bras, à côté du plateau tournant. A partir du magasin, un segment de tôle attiré par des aimants est d'abord transporté, par une rotation de 90° du tourniquet, au dispositif d'alignement, où le tourniquet descend et les aimants sont éloignés par des expulseurs pour que ce segment puisse être aligné. Ensuite, les aimants reprennent le segment, le tourniquet remonte, tourne à nouveau de 90°, s'arrête au dessus de l'endroit d'empilage et s'abaisse, puis des expulseurs font tomber le segment dans les butées d'empilage du plateau tournant immobilisé. Avant que le segment suivant arrive, le plateau tournant doit être tourné d'un angle correspondant à la longueur périphérique des segments. Le transport des segments au plateau tournant par le tourniquet, qui doit exécuter non seulement des mouvements rotatifs bien définis, mais aussi se déplacer verticalement, est donc assez compliqué; en outre l'alignement des segments par rapport à l'endroit d'empilage se fait en deux pas, à savoir d'abord dans le dispositif d'alignement par rapport au bras correspondant du tourniquet, ensuite par la position d'arrêt exacte du tourniquet. Un autre inconvénient est le fait que les segments de tôle qui doivent former un anneau complet sont transportés successivement l'un après l'autre au plateau tournant qui doit avancer pas à pas en rotation. Enfin, pour arriver à un recouvrement des segments dans deux couches de tôle superposées pendant la formation d'un paquet, les postes d'alimentation doivent être déplacés dans le sens circonférentiel. La fixation des anneaux d'un paquet à l'état pressé se fait par soudage en différents points de la périphérie du paquet.

Il est connu pour la construction du stator de petites et moyennes machines électriques et notamment des alternateurs de voitures automobiles, de former des paquets d'anneaux découpés par étampage dans des tôles magnétiques ou autres et de les assembler par rivetage ou soudage. Les anneaux dont le diamètre est de l'ordre de 50 à 200 mm présentent vers l'intérieur des fentes ouvertes formées par des bras dirigés radialement vers l'intérieur et s'épaississant à leur extrémité libre de sorte que la distance entre les extrémités de deux bras consécutifs dans le sens périphérique est inférieure à la distance entre les corps de bras. En fait ces bras forment les pièces polaires du stator. Le découpage par étampage d'un anneau entier présente quelques désavantages: La quantité de déchets est importante car la partie de la tôle correspondant au diamètre intérieur de l'anneau ne peut être utilisée que pour la formation d'un anneau de diamètre inférieur, pour autant que l'épaisseur de la tôle et le diamètre correspondent aux caractéristiques techniques requises. D'une autre part, il y a aussi une grande quantité de déchets de tôle correspondant à la partie de la tôle qui se trouve à l'extérieur du diamètre d'un anneau. La construction des anneaux ne permet pas de respecter les tolérances de forme requise et les dimensions exactes aussi bien des anneaux que des paquets d'anneaux, à cause des tensions internes créées lors de l'étampage, lesquelles ne peuvent pas être éliminées facilement à cause de la forme fermée de l'anneau. Ces tensions internes ont une influence sur les tolérances d'ovalisation, et de grandeur des diamètres intérieurs et extérieurs des anneaux et sur le parallélisme de deux faces d'un paquet de tôles. Souvent il est nécessaire d'effectuer un usinage supplémentaire du stator afin de pouvoir respecter les tolérances requises. A titre d'exemple pour un stator formé par 21 anneaux d'un diamètre extérieur de 117 mm et d'épaisseur de 1 mm les tolérances requises sont les suivantes.

– hauteur (21+0,55) mm et (21-0,05) mm
– parallélisme 0,15 mm
– diamètre intérieur (88,9+0,05) mm et (88,9-0) mm.

Les meilleurs résultats obtenus dans un tel cas avec des anneaux fermés venant d'une pièce sont: en ce qui concerne le parallélisme (0,4) mm, et en ce qui concerne le diamètre intérieur 188,9 + 0,15) mm. Il est évident qu'en ce qui concerne le diamètre, un usinage du stator est obligatoire, ce qui a pour conséquence l'augmentation du coût de la fabrication.

La présente invention a pour but de pallier ces inconvénients on proposant un procédé de fabrication de paquets et d'assemblage de tôles magnétiques ou autres de forme annulaire permettant d'une part de réduire la quantité de déchets et d'autre part d'éliminer les tensions internes des anneaux étampés rendant ainsi possible le respect des tolérances requises sans qu'un usinage ultérieur du stator soit nécessaire.

Le procédé selon l'invention est caractérisé par la clause caractérisante de la revendication 1.

L'avantage essentiel de l'invention est lié au fait que l'on forme un anneau par des segments juxtaposés, leur nombre pouvant varier de deux à six mais de préférence on en utilise trois. De cette manière, on élimine d'une part les tensions internes créées sur un anneau fermé lors de l'étampage permettant ainsi le respect des tolérances requises sans qu'un usinage du stator soit nécessaire, et d'autre part on diminue la quantité de déchets de tôle. L'assemblage des anneaux et de paquets se fait automatiquement selon les phases b à f de la revendication 1. Le centrage du paquet des segments par l'intérieur et l'extérieur avant son assemblage définitif permet d'obtenir les tolérances requises. Le décalage angulaire entre deux couches consecutives est nécessaire pour assurer l'assemblage du paquet de tôles et éviter que le paquet se sépare en autant de segments de cylindre que de segments formant un anneau, et, d'autre part, pour permettre d'annuler les éventuelles différences d'épaisseur de tôles.

L'arrangement décalé des couches de segments d'un angle $\alpha/2$ et obtenu par l'avancement alterné de deux groupes de n plateaux transporteurs régulièrement répartis autour du plateau d'ajustement, chacun étant approvisionné par 2n magasins correspondants.

Selon une variante, les éventuelles différences d'épaisseur de tôles affectant le parallélisme du paquet sont compensées en faisant tourner le disque d'empilage d'un angle $\alpha$ au moins n fois, chaque rotation intervenant après qu'un nombre prédéterminé de couches de segments soient entassées.

Selon une variante, et afin de tenir compte des tolérances x de l'épaisseur O des tôles, on forme d'abord un paquet de tôles d'une hauteur H' représentant environ 80 à 95 % de la hauteur prescrite H, on mesure la hauteur H' et, en fonction de la différence subsistant entre la hauteur mesurée H' et la hauteur prescrite H, on complète soit avec au moins une couche de segments de tôle d'épaisseur D', plus petite que D jusqu'à la hauteur d'environ (H-D) si H' n'a pas atteint approximativement (H-D), puis on complète par une couche de segments de tôle D, soit on complète par une ou plusieurs couches de segments de tôle d'épaisseur D' jusqu'à la hauteur H.

Il est préférable pour des raisons de construction et de résistance mécanique que la dernière couche du paquet soit formée par des segments d'épaisseur D. Ainsi, selon une variante, on forme le paquet partiel d'un nombre de segments de tôle d'épaisseur D tel que la différence entre la hauteur H et la somme de toutes les tolérances positives maximales de l'épaisseur des segments de tôle soit, dans le cas le plus défavorable, encore au plus égale à D.

Par exemple, pour la formation d'un paquet de tôles de hauteur H = mDo dans le cas où Do = 0,8 à 1,2 mm, de préférence 1 mm; x = 5 % et m = 15 à 25, on forme d'abord un paquet de (m-2) couches et on utilise pour le compléter des segments de tôle d'épaisseur D' = 0,7 à 0,6 mm environ.

L'invention concerne également une installation de mise en oeuvre du procédé.

L'installation selon l'invention est caractérisée par le fait qu'elle comprend au moins une station d'empilage et une station d'assemblage par rivetage, par le fait que la station d'empilage comprend: au moins n magasins remplis de segments de tôle, régulièrement répartis autour d'un plateau d'ajustement dont le diamètre correspond au diamètre intérieur de l'anneau à compléter, n plateaux transporteurs pour amener de n magasins n segments de tôles contre le plateau d'ajustement qui est muni de n organes de maintien desdits segments, un disque d'empilage disposé au-dessous dudit plateau d'ajustement muni de tiges de guidage, au moins deux par segment de tôle s'engageant dans des fentes correspondantes de segments lors de leur chute après le retrait des plateaux transporteurs, des moyens pour assurer le décalage angulaire entre deux couches de segments de tôle consécutives.

D'autres caractéristiques ressortiront de la description d'une variante de l'installation de mise en oeuvre du procédé.

La variante de l'installation sera décrite à titre d'exemple non limitatif à l'aide du dessin annexé.

La figure 1 est une représentation schématique d'une installation de mise en oeuvre du procédé comprenant six stations de travail différentes.

La figure 2 est une vue partielle et de côté de la station d'empilage.

La figure 3 est une vue partielle de dessus montrant l'assemblage d'un anneau, un seul plateau transporteur étant représenté.

La figure 4 est une vue de dessus de la station d'empilage.

La figure 5 est une vue partielle de dessus d'un plateau transporteur avec un segment de tôle.

La figure 5a est une vue en coupe selon le ligne Va-Va de la figure précédente.

Les figures 6, 6a et 7, 7a sont des vues analogues aux figures 5 et 5a montrant la prise en charge d'un segment par un organe de maintien.

La figure 8 est une vue de côté et en coupe de certains éléments de la station de sertissage.

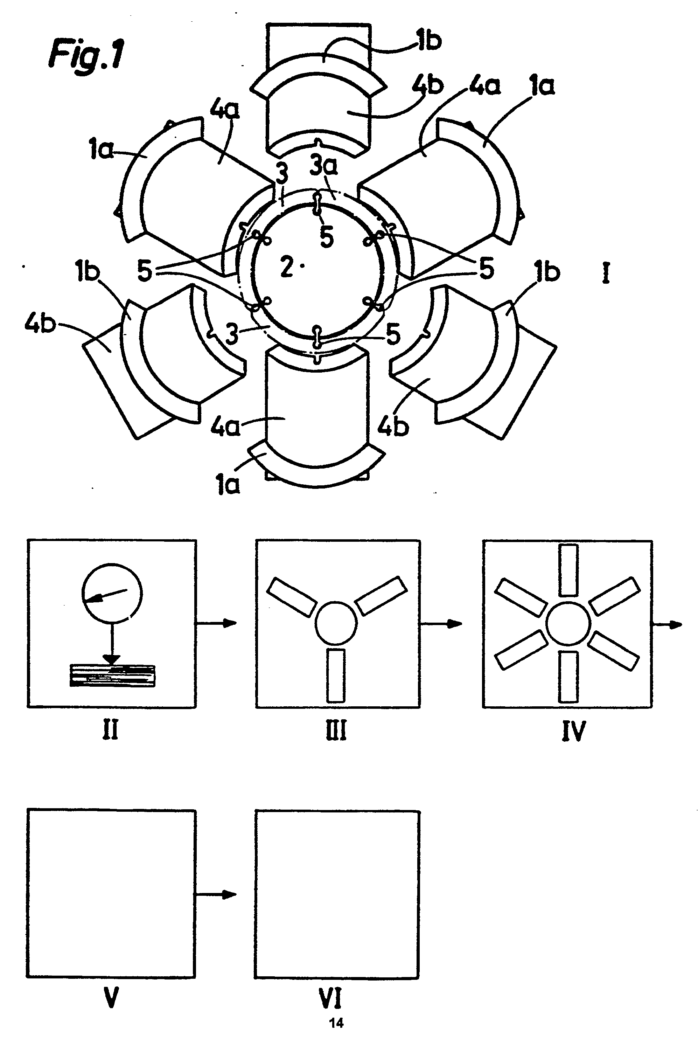

L'installation complete de mise en oeuvre du procédé illustrée à la figure 1 comprend six stations principales de travail dont les plus importantes sont la station d'empilage I et la station de sertissage VI.

Les stations de travail de l'installation dans l'ordre

du déroulement de la fabrication sont les suivantes: La station d'empilage I, la station de mesure II de la hauteur d'un paquet partiel, les stations III d'empilage de tôles d'épaisseur D' inférieure à l'épaisseur D et IV pour l'empilage de tôles d'épaisseur D afin de compléter le paquet partiel par des couches d'épaisseur D' et/ou D suivant le résultat de mesure à la station II, la station V de centrage de segments et de mise en place de rivets et enfin la station VI de sertissage.

Le travail d'empilage étant celui qui demande le plus grand temps, il est possible de prévoir une installation munie d'au moins deux stations d'empilage.

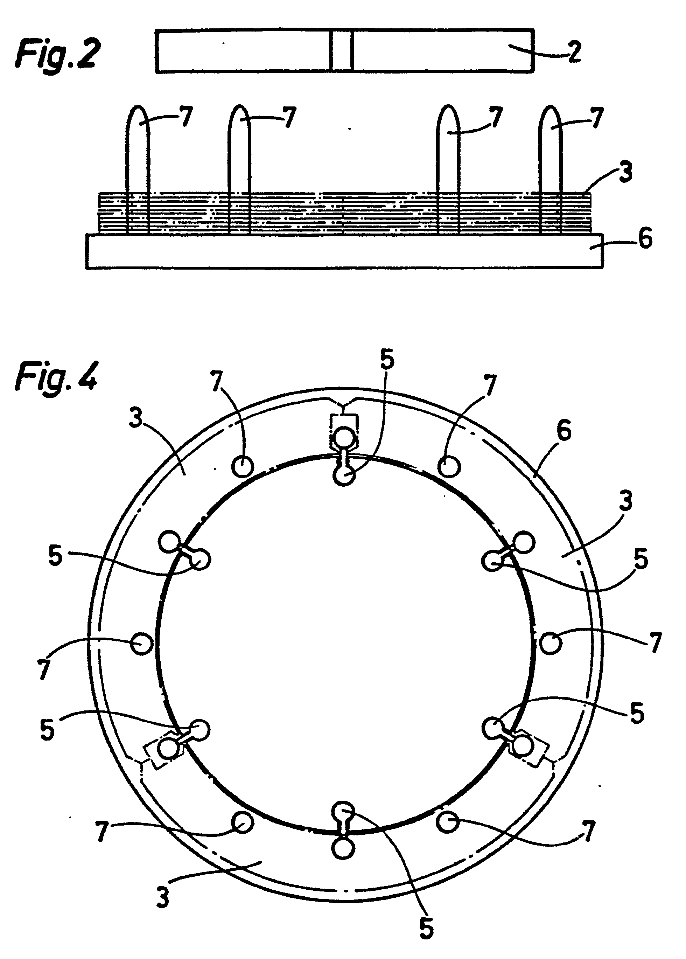

La station d'empilage I représentée tout à fait schématiquement comprend six magasins 1a et 1b régulièrement répartis autour d'un plateau d'ajustement 2. Dans l'exemple choisi, les segments annulaires 3 ont une dimension angulaire de 120° et une épaisseur D. A l'exemple illustré les segments 3 représentés en traits mixtes ont été fournis par les magasins 1a et amenés par les plateaux transporteurs 4a qui sont représentes tout à fait schématiquement. Les magasins 1b, décalés de 60° par rapport aux magasins 1a, fourniront des segments 3 amenés par les plateaux 4b pour former une ou plusieurs couches de segments décalés de 60° par rapport aux segments fournis par les magasins 1a, afin de permettre, d'une part, d'assurer l'assemblage d'un paquet et d'autre part, de compenser les éventuelles erreurs de la valeur nominale de l'épaisseur des segments de tôle. Pour obtenir le décalage entre deux couches successives, on amène les segments de la première couche, par exemple, par les plateaux 4a, et de la suivante par les plateaux 4b. Les segments 3 sont tenus par les organes de maintien 5 faisant face aux magasins et plateaux transporteurs correspondants. Les éléments de la station d'empilage I seront décrits plus en détail à l'aide des figures 2 à 7a. Un dispositif transporteur amène un paquet de segments d'une hauteur H' < H, H étant la hauteur requise, à la station de mesure II ou on mesure exactement la hauteur H' et ensuite le paquet passe aux stations III et IV comprenant, la première, trois magasins et trois plateaux transporteurs, et la seconde, six. Les magasins de la station III sont remplis de segments d'une épaisseur D'inférieure à D, alors que ceux de la station IV sont remplis des segments d'épaisseur D.

Selon le résultat de la mesure obtenue à la station II, le paquet est complété par des couches de segments de la station III et/ou IV. A titre d'exemple, si on doit former un paquet de hauteur de 21 mm par des segments de tôles d'épaisseur de 1 mm, on forme à la station d'empilage I un paquet de dix-neuf couches, on amène le paquet à la station de mesure II pour mesurer sa hauteur H' et ensuite le paquet passe aux stations III et IV où il est complété de sorte que sa hauteur soit la plus proche de 21 mm et surtout à l'intérieur des tolérances requises. Les segments de la station III ont par exemple une épaisseur D'= 0,7 mm.

En considérant les tolérances mentionnées précédemment, la hauteur du paquet doit être comprise entre (21-0,05) mm et (21 +0,55) mm et le choix du nombre de couches de segments de l'une ou de l'autre ou de toutes les deux stations III et IV est fait de sorte que la hauteur H reste à l'intérieur des tolérances requises. Si la hauteur mesurée H' = 19,2 mm, alors il faut compléter le paquet par deux couches de 1 mm de la station IV et obtenir ainsi une hauteur de 21,2 mm qui est bien à l'intérieur des tolérances. De même si H' = 19,4 mm on complètera par une couche de 0,7 mm de la station III et une couche de 1 mm de la station IV. Il faut souligner que les magasins et les plateaux transporteurs de la station sont au nombre de six de sorte que si deux couches sont déposées à la station IV, ces couches sont décalées de 60°.

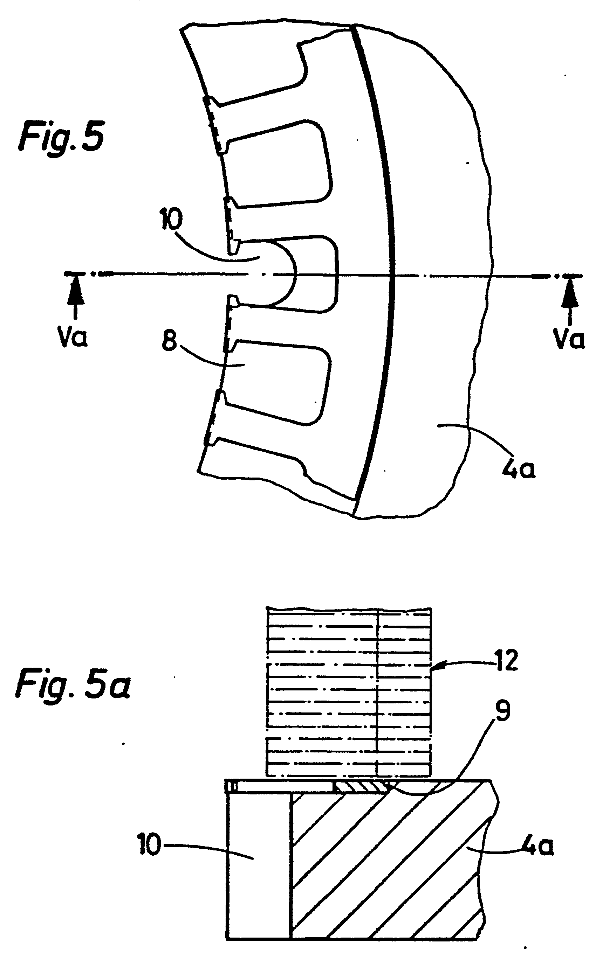

A la figure 2 on a représenté une vue partielle et de côté de la station d'empilage. On a notamment représenté le plateau d'ajustement 2 supportant les éléments de maintien 5, et en-dessous, le disque d'empilage 6 muni de six tiges de guidage 7 régulièrement réparties sur le disque 6. Chacun des anneaux 3 est guidé lors de sa chute par deux des tiges 7 qui s'engagent dans deux fentes espacées de 60°. La figure 4 est une vue de dessus de la figure 2. On a représenté en traits mixtes sur la figure 2 plusieurs couches de segments et sur la figure 4 on voit la couche supérieure.

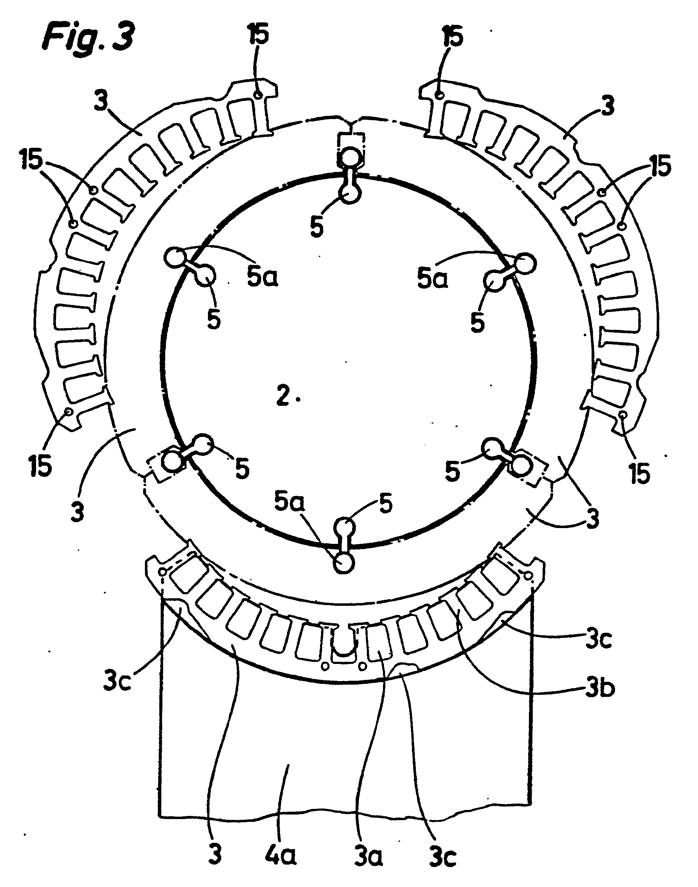

A la figure 3, on voit en traits pleins trois segments 3 d'un anneau amenés par des plateaux transporteurs 4a, dont un seul est représenté à la partie inférieure de la figure, vers le plateau d'ajustement 2. On a représenté sur la même figure schématiquement en traits mixtes les trois segments 3 maintenus par les trois organes de maintien 5 faisant face aux plateaux 4a avant que les plateaux transporteurs 4a se retirent. Le seul plateau transporteur 4a représenté à la figure 3 est monté sur une glissière et il est entraîné par un vérin à double effet. Son extrémité 8 se trouvant vers le plateau d'ajustement 2 a la forme d'un segment d'anneau de dimensions correspondant à celles d'un segment annulaire de tôle 3, formé dans un décrochement 9 du plateau 4a. Le décrochement 9 (fig. 5a, 6a, 7a) sert de butée à un segment annulaire de tôle 3 lors de sa prise en charge par le plateau transporteur 4a. L'extrémité annulaire 6 d'un plateau 4a ou 4b est munie à son milieu d'une encoche 10 de dimensions et forme correspondant à celles du corps 5a (qui sera decrit ultérieurement) d'un organe de maintien 5, faisant saillie radialement par rapport au plateau d'ajustement 2, afin de permettre au plateau transporteur 4a ou 4b d'amener le segment transporté 3 contre le plateau d'ajustement 2. L'encoche 10 se trouve au-dessous d'une fente 3a limitée par deux bras consécutifs 3b d'un segment d'anneau 3. La périphérie extérieure d'un segment est munie d'encoches 3c servant au centrage et guidage de segments 3 dans les magasins et sur les plateaux transporteurs.

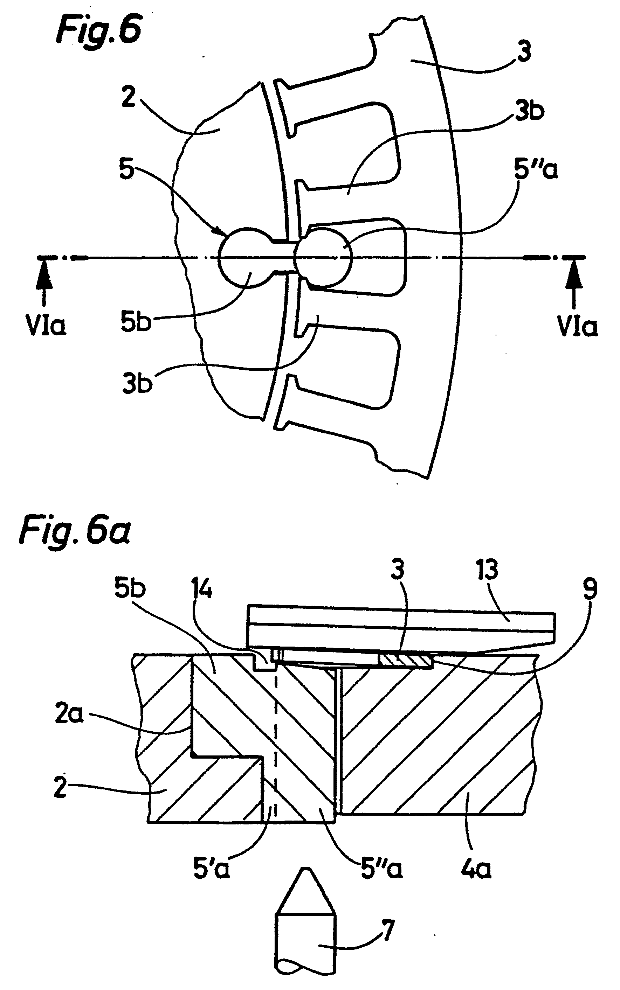

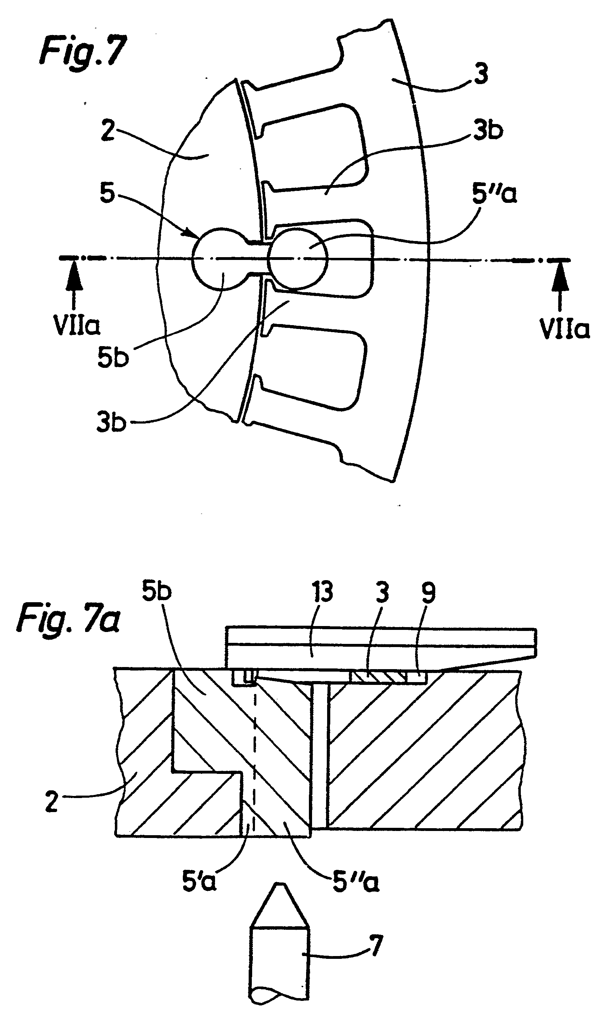

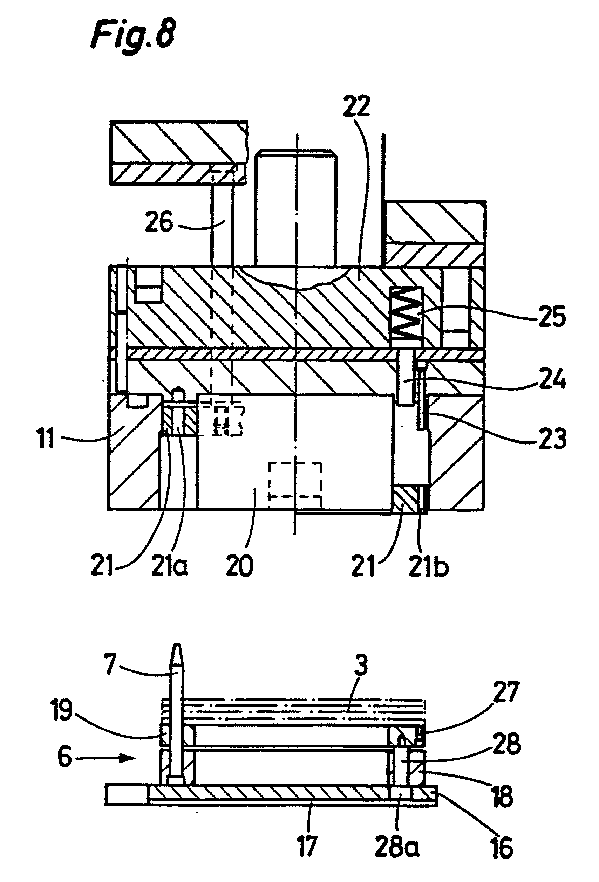

La figure 5, représente une vue partielle d'un segment annulaire 3 pris en charge par un plateau transporteur 4a ou 4b. L'encoche 10 est visible entre deux bras consécutifs 3b du segment 3. Un aimant permanent peut être fixé dans un logement du plateau pour assurer la tenue du segment 3. On a représenté à la figure 5a en traits mixtes tout à fait schématiquement et en coupe un magasin 12 de segments de tôle 3. Le plateau transporteur recule jusqu'à ce que son extrémité présentant le décrochement 9 en forme d'anneau se trouve exactement sous le magasin 12, alors le segment inférieur de la pile tombe dans le décrochement 9 et le plateau 4a est poussé vers l'avant en direction du plateau d'ajustement 2 (fig. 6, 6a, 7, 7a) pour y amener le segment 3 et le cycle recommence.

Aux figures 6 et 6a on a représenté un segment 3 à proximité du plateau d'ajustement 2. A la figure 6 on a représenté uniquement une partie du plateau d'ajustement 2 avec un organe de maintien 5 et un segment 3, le plateau transporteur n'a pas été représenté. A la figure 6a on a présenté en coupe un plateau transporteur 4a, le segment 3 l'organe de maintien 5, le plateau d'ajustement 2 et un élément 13 assistant l'organe de maintien 5 qui sera décrit par la suite.

L'organe de maintien 5 présente un corps 5a faisant saillie par rapport au plateau d'ajustement 2 et formé de deux parties, une première partie prismatique 5'a dont la largeur est inférieure à la distance périphérique entre les extrémités de deux bras consécutifs 3b du segment 3, et une seconde partie cylindrique 5"a dont le diamètre est supérieur à la distance entre les extrémités des deux bras 3b consécutifs et inférieur à la distance entre les corps desdits bras. Cette seconde partie 5"a peut être également prismatique pour autant que sa largeur satisfasse aux mêmes conditions que le diamètre de la partie cylindrique. L'organe de maintien 5 est enfiché dans une encoche 2a approximativement cylindrique du plateau d'ajustement 2 par un corps 5b de forme et dimensions correspondant à celles de l'encoche 2a du plateau 2. La face supérieure de la partie cylindrique 5"a est inclinée, la partie la plus élevée se trouvant du côté de la partie prismatique 5'a et formant avec elle un décrochement 14.

Lorsque le plateau transporteur 4a arrive à proximité du plateau d'ajustement 2, un élément plat 13 soumis à un effort vertical élastique plaque le segment 3 contre le plateau 4a et assiste sa prise en charge par l'organe de maintien 5. Quand le plateau 4a arrive contre le corps 5a les extrémités des deux bras 3b se trouvant au-dessous de l'encoche 10 du plateau transporteur 4a glissent sur la face inclinée de la partie 5"a et le segment 3 se trouve en position inclinée comme indiqué à la figure 6a. La pression exercée pendant ce temps par l'élément 13 assure le contact permanent du segment avec le plateau transporteur 4a et l'organe 5, et évite que le segment 3 quitte le plateau 4a. Lorsque les extrémités des bras 3b dépassent la face supérieure de la partie cylindrique 5"a, elles tombent dans le décrochement 14 de l'organe de maintien 5 et le segment 3 reprend sa position horizontale. La distance entre le point le plus élevè de la face superieure de la partie 5 a et la face d'appui de l'élément 13 doit être de l'ordre de 30 à 40 % de l'épaisseur d'un segment afin d'assurer le bon maintien du segment lors du recul du plateau transporteur. Le plateau transporteur 4a étant arrivé à la fin de sa course vers le plateau d'ajustement, est par la suite déplacé dans le sens contraire comme indiqué à la figure 7a mais le segment 3 ne peut pas le suivre car les extrémités des bras 3b viennent buter contre la partie cylindrique 5"a dont le diamètre est supérieur à leur distance. L'élément 13 assure d'ailleurs la tenue verticale du segment 3 pendant le recul du plateau 4a. Lorsque le plateau 4a n'est plus en contact avec le segment 3, ce dernier tombe verticalement sur le plateau d'empilage 6 guidé par les tiges 7. Il est évident que les mêmes opérations se font simultanément par les trois plateaux transporteurs 4a (respectivement 4b).

Pour assurer le décalage angulaire entre deux couches successives, on amène des segments, alternativement des magasins 1a et 1b, par les plateaux transporteurs 4a, respectivement 4b. Après avoir formé un paquet partiel de hauteur H', le disque d'empilage 6 est amené à la station de mesure II et ensuite aux stations III et IV ou opèrent des plateaux transporteurs et des plateaux d'ajustement identiques à ceux décrits.

Selon une variante, pour compenser les erreurs d'épaisseur de segments de tôles influant sur le parallélisme du paquet, on fait tourner le disque d'empilage 6 trois fois d'un angle de 120°. La première rotation s'opère lorsque le tiers de la hauteur du paquet est atteint, ensuite les 2/3 et enfin une dernière fois avant l'évacuation du paquet lorsque H' est atteint. Bien sûr le nombre des rotations peut être supérieur à trois, mais de préférence un multiple entier de trois dans le cas présent, et d'une manière générale, un multiple entier de n, l'angle de rotation étant $\alpha$.

Il est possible de former un anneau par un nombre supérieur de segments, par exemple six. Dans ce cas, les éléments de l'installation sont les mêmes que ceux décrits précédemment quant à leur structure, mais le nombre de magasins des plateaux transporteurs et organes de maintien doit être adapté au nombre de segments constituant un anneau.

Après le passage du paquet de tôles par les stations II, III et IV, le paquet arrive à la station V, pour la mise en place de rivets. Les rivets, d'une seule pièce en fil d'acier doux, sont introduits dans les trous 15 (fig.3) des segments superposés qui forment ainsi des passages verticaux. Avant la mise en place des rivets le paquet est serré, entre deux coquilles ayant la forme d'un demi cylindre afin d'assurer un centrage approximatif du paquet.

Après la mise en place des rivets, le disque d'empilage est amené à la station de sertissage VI.

A la figure 8 on a représenté une vue plus détaillée du disque d'empilage 6 et du dispositif de sertissage. Le disque d'empilage 6 est composé d'un plateau 16 dont la forme est cylindrique ou rectangulaire munie sur sa face inférieure de deux rainures 17 s'engageant sur deux rails correspondants du dispositif de transfert. Sur le plateau 16 est fixé un anneau 18 traversé par les tiges de guidage 7 (dont une seule est représentée ici), un second anneau amovible 19 muni de passages cylindriques pour les tiges de guidage 7 est suspendu sur le premier anneau 16 par des petits ressorts (non représentés). L'anneau 19 est muni, à la verticale des trous 15 des segments, d'orifices cylindriques 27 à l'intérieur desquels se trouvent des pointes dont la longueur est légèrement inférieure à celle des orifices 27. Les pointes sont munies à leur extrémité inférieure d'une tête les empêchant de sortir de l'anneau 19 en le traversant de bas en haut. Des vis 28, régulièrement réparties, sont vissées sur la face inférieure de l'anneau 19. Les vis 28 traversent librement (sans être vissées) l'anneau 18 tandis que leur tête 28a est logée dans un passage cylindrique du plateau 16 se trouvant à la verticale de l'une ou de l'autre des rainures 17.

Le dispositif de sertissage comprend essentiellement un moule 11, une quille 20 dont le rôle est de centrer les couches de segments par l'intérieur et par l'extérieur et d'assurer ainsi le respect des diamètres intérieur et extérieur du paquet de tôles se trouvant sur l'anneau 18 avant le sertissage, le moule et la quille étant assujettis à une presse 22. Entre le moule 11 et la quille 20 se trouve le dévêtisseur 21 représenté ici en deux positions extrêmes, position basse à droite de la figure 8 et position haute à gauche de la même figure. Le sertissage est réalisé de la manière suivante: la presse 22 fait descendre le moule 11 et la quille 20 sur le paquet de tôles 3 supporté par le disque d'empilage 6 décrit précédemment. Le dévêtisseur 21 en position basse entre en contact avec le paquet et au fur et à mesure de la descente de la presse, le moule 11 et la quille 20 centrent les couches successives de tôles, le dévêtisseur étant muni d'une série d'orifices 21a pour le passage de tiges de guidage 7 et d'une série d'orifices 21b pour le passage des rivets et des pointes de sertissage 23. Le diamètre extérieur de la quille 20 et le diamètre intérieur du moule 11 correspondent exactement au diamètre intérieur, respectivement extérieur, du paquet de tôles choisi. Lorsque le dévêtisseur arrive vers la fin de sa course (position haute), il entre en contact avec des doigts 24 régulièrement répartis et se trouvant sous l'action des ressorts 25. Les doigts 24, sous l'action des ressorts 25, et l'anneau 18, sous l'action des vis 28, elles-mêmes

soumises à l'effort des rampes à ressorts logés dans les rainures 17, compriment le paquet de tôles et centrent les rivets par rapport au paquet. Le centrage s'effectue d'un côté par les pointes 23 dans l'espace laissé libre dans les orifices 21b du dévêtisseur en position haute, de l'autre côté dans les orifices cylindriques 27 de l'anneau 19 par les pointes correspondantes, lorsque les ressorts de suspension sont comprimés. Une fois le centrage des rivets réalisé, la presse 22 continue à descendre et le sertissage s'opère, les têtes de rivets étant de même grandeur des deux côtés du paquet. Les têtes supérieures sont obtenues par l'action des pointes 23 et les têtes inférieures par les pointes logées dans les orifices cylindriques 27 de l'anneau 19 du disque d'empilage 6. A la fin du sertissage, la presse remonte et le paquet est expulsé par la descente du dévêtisseur 21 sous l'action d'un effort vertical exercé par des tiges 26 entraînées par un vérin.

Avec une telle installation, le déposant a fabriqué des paquets de tôles d'une hauteur nominale de 21 mm en obtenant des paquets dont le défaut de parallélisme entre les deux faces du paquet est de 0,15 mm tandis que pour des paquets formés avec des anneaux fermés ce défaut est au minimum de 0,4 mm.

L'assemblage des paquets de tôles peut être fait d'une autre manière, par exemple par soudage, mais avant celui-ci, il est absolument nécessaire de centrer le paquet de tôles avec un dispositif tel que décrit précédemment, muni d'un moule et d'une quille.

**Revendications**

1. Procédé de fabrication de paquets de tôles magnétiques ou autres de forme annulaire pour petites et moyennes machines électriques, en particulier des alternateurs pour véhicules à moteur, à partir de tôles étampées en effectuant les pas suivants : on découpe par étampage des segments annulaires (3) de tôle d'une longueur périphérique correspondant à un angle $\alpha = 360°/n$, n étant un entier positif supérieur ou égal à 2, à partir de quelques magasins (1a, 1b) répartis autour d'un disque d'empilage (6) on amène des segments (3) de tôle au moyen d'un organe transporteur (4a, 4b) dans une position ajustée, verticalement au-dessus dudit disque d'empilage (6) muni de tiges de guidage (7) et on laisse tomber ces segments (3) de tôle sur ledit disque d'empilage (6), où n segments (3) de tôle se complètent en un anneau fermé, le disque d'empilage (6) ayant reçu au moins une couche de segments de tôle, au moins la couche suivante de segments de tôle est déposée sur la pile avec un décalage angulaire correspondant à un angle différent de $\alpha$ relativement à la première couche déposée, le cas échéant ce décalage de l'arrangement des couches successives de segments de tôle est répété plusieurs fois de manière à obtenir des superpositions

différentes des couches individuelles de segments de tôle, après avoir entassé autant de couches de segments (3) de tôles qu'il est nécessaire pour obtenir la hauteur requise du paquet de tôles, les segments de tôle du paquet, respectivement les couches de segments de tôle, sont alignés, on les presse et on les fixe ensemble, caractérisé par la combinaison des phases suivantes :

a) lesdites tôles présentent des fentes ouvertes vers l'intérieur, un rétrécissement à leur entrée, et elles sont formées par des bras (3b) dirigés radialement vers l'intérieur allant en s'épaississant à leur extrémité,

b) à partir d'au moins n magasins (1a, 2b) régulièrement répartis autour d'un plateau d'ajustement (2) se trouvant au-dessus du disque d'empilage (6), on amène n segments (3) au moyen des plateaux transporteurs (4a, 4b) constituant lesdits organes transporteurs et se déplaçant radialement contre le plateau d'ajustement (2), les segments étant tenus en position ajustée par des organes de maintien (5).

c) on retire les plateaux de transport (4a, 4b) et les segments de tôle retenus par les organes de maintien (5) après leur déchargement des plateaux transporteurs (4a, 4b) tombent alors verticalement sur le disque d'empilage (6) les tiges de guidage (7) s'engagent dans au moins deux fentes de chaque segment de tôle,

d) après avoir aligné les segments formant le paquet de tôles de hauteur requise dans lequel ledit décalage angulaire des couches des segments a été fait de préférence d'un angle $\alpha/2$ ou d'un multiple impair de cet angle $\alpha/2$, les segments sont centrés simultanément par l'intérieur et par l'extérieur du paquet,

e) on fixe les couches du paquet par sertissage sous presse qui expanse des rivets, constitués par des morceaux d'un fil d'acier doux, à l'intérieur de leur logement afin de rigidifier le paquet de façon que les dimensions du paquet définitivement rigidifié par lesdits rivets soient exactement conformes aux dimensions prédéterminées du paquet, sans usinage ultérieur.

2. Procédé selon la revendication 1, caractérisé en ce que ledit arrangement décalé des couches de segments de tôle d'un angle $\alpha/2$ est obtenu par l'avancement alterné de deux groupes de n plateaux transporteurs (4a, 4b) chacun, les n plateaux de chaque groupe étant régulièrement disposés autour du plateau d'ajustement (2) et intercalés par rapport à l'autre groupe, les 2n plateaux transporteurs (4a, 4b) étant approvisionnés par 2n magasins correspondants (1a, 1b).

3. Procédé selon la revendications 1 ou 2, caractérisé en ce qui le disque d'empilage (6) entre la première et la dernière couche de segments est tourné d'un angle au moins n fois, chaque rotation ayant lieu après qu'un nombre prédéterminé de couches soit entassé.

4. Procédé selon l'une quelconque des revendications 1 à 3, caractérisé en ce que pour former un paquet de tôles de hauteur H, dont la valeur doit être comprise à l'intérieur de tolérances prescrites, des couches de segments de tôles d'épaisseur $D = Do \pm x$ (où Do est l'épaisseur théorique prescrite et x représente les tolérances possibles) sont empilées en un paquet partiel d'une hauteur H' représentant environ 80 à 95 % de la hauteur prescrite H, puis on mesure la hauteur H' et en fonction de la différence subsistant entre la hauteur mesurée H' et la hauteur possible H, soit on complète la pile avec au moins une couche de segments de tôles d'épaisseur D' plus petite que D jusqu'à une hauteur d'environ (H-D) puis on complète par une couche prescrite H, si H' n'a pas déjà atteint approximitivement la valeur (H-D), ou on complète la pile avec une ou plusieurs couches de segments de tôles d'épaisseur D', inférieure à D, jusqu'à la hauteur prescrite H.

5. Procédé selon la revendication 4, caractérisé en ce qu'un paquet partiel est formé d'un nombre de couches de segments de tôle d'épaisseur D tel que la différence entre la hauteur prescrite H et la comme de toutes les tolérances positives maximmales de l'épaisseur des segments de tôle soit, dans le cas le plus défavorable, au plus égale à D.

6. Procédé selon la revendication 5, caractérisé en ce que, pour la formation d'un paquet de tôles de hauteur prescrite $H = m.Do$: dand le cas ou $D = 0,8$ à 1,2 mm, de préférence 1 mm, $x = 5$ % et $m = 15$ à 25, on forme d'abord un paquet partiel de (m-2) couches de segments de tôle et qu'on utilise des segments de tôle d'épaisseur plus petite D' présentant une épaisseur d'environ 0,7 à 0,8 mm.

7. Installation de mise en oeuvre du procédé selon la revendication 1, caractérisée par le fait qu'elle comprend au moins une station d'empilage (I) et une station d'assemblage (VI) par rivetage, par le fait que la station d'empilage (I) comprend: au moins n magasins (1a, 1b) remplis de segments (3) de tôle, régulièrement répartis autour d'un plateau d'ajustement (2) dont le diamètre correspond au diamètre intérieur de l'anneau à compléter, n plateaux transporteur (4a; 4b) pour amener de n magasins (1a; 1b) n segments (3) de tôle contre le plateau d'ajustement (2) qui est muni de n organes (5) de maintien desdits segments, un disque d'empilage (6) disposé au-dessous dudit plateau d'ajustement (2) muni de tiges de guidage (7), au moins deux par segment (3) de tôle, s'engageant dans les fentes correspondantes des segments (3) lors de leur chute après le retrait des plateiux transporteurs (4a: 4b), des moyens pour assurer le décalage angulaire entre deux couches de segments de tôle consecutives.

8. Installation selon la revendication 7, caractérisée par le fait que chacun des organes de maintien (5), fixés sur le plateau d'ajustement (2) où ils sont montés de façon amovible, comprend un corps (5a) faisant saillie radialement par rapport audit plateau (2), ledit corps (5a) étant constitué de deux parties, une première partie (5'a) qui est la plus proche du pourtour du plateau d'ajustement (2) de forme approximativement prismatique et dont la largeur est inférieur à la distance périphérique entre les extrémités épaissies de deux bras consécutifs (3b) d'un segment (3) et une seconde partie (5″a) s'étendant radialement à la suite de la première, de forme prismatique ou cylindrique, et dont la largeur, respectivement le diamètre, est supérieure à la distance entre les extrémités épaissies de deux bras d'un segment (3) et inférieure à la largeur d'une fente (3a), la face supérieure de la seconde partie (5'a) étant inclinée de sorte que sa partie la plus élevée forme avec la face supérieure de la première partie (5'a) un décrochement, et la partie la plus basse de la face inclinée se trouve du côté et approximativement à la même hauteur que la surface du plateau transporteur (4a; 4b) amenant un segment de tôle (3), que la paroi frontale de l'extrémité du plateau transporteur (4a; 4b) est munie d'une encoche (10) de forme correspondant à celle du corps (5a) de l'organe de maintien, faisant saillie et de dimensions supérieures à celles dudit corps (5a).

9. Installation selon la revendication 8, caractérisée par le fait que l'extrémité (8) de chaque plateau transporteur (4a; 4b) supportant un segment de tôle (3) a la forme d'un segment d'anneau formé dans un décrochement dont la hauteur est égale à l'épaisseur d'un segment d'anneau de tôle (3).

10. Installation selon la revendication 8, caractérisée par le fait que l'organe de maintien (5) comprend en outre un élément (13) exerçant sur le segment de tôle (3) amené par un plateau transporteur (4a; 4b) une pression verticale sous l'action d'un élément élastique pour assurer la tenue par l'organe de maintien (5) du segment de tôle (3).

11. Installation selon l'une quelconque des revendications 8 à 10 pour la mise en oeuvre du procédé selon la revendication 1, caractérisée par le fait que les moyens assurant le décalage angulaire entre deux couches successives se composent de 2n magasins (1a, 1b) régulièrement répartis autour du plateau d'ajustement (2) auxquels sont associés 2n plateaux transporteurs (4a, 4b) et 2n dispositifs de maintien (5), les segments de tôle formant deux couches successives décalées sont amenés pour la première couche de n premiers magasins (1a) régulièrement répartis autour du plateau d'ajustement (2) et pour les suivants par les n magasins restants (1b).

12. Installation selon l'une quelconque des revendications 8 à 11 pour la mise en oeuvre du procédé selon la revendication 3, caractérisé par le fait que le disque d'empilige (6) est pourvu des moyens qui le font tourner d'un angle α au moins n fois lors de la formation d'un paquet de tôle.

13. Installation selon l'une quelconque des revendications 8 à 12 pour la mise en oeuvre du pocédé selon l'une quelconque des revendications 4 ou 5, caractérisée par le fait qu'elle comprend une station de mesure de la hauteur H' (II) du paquet partiel, suivi de deux stations d'empilage (III; IV) chacune étant munie de n magasins (1a, 1b), les magasins de la première des stations (III) étant remplis de segments de tôle d'épaisseur D' et ceux de la seconde (IV) de segments d'épaisseur D, par le fait que les magasins (1a, 1b) et les plateaux transporteurs (4a, 4b) des stations d'empilage (III; IV) situées après la station de mesure (II) sont disposés de manière que les segments (3) d'une couche déposés par l'une des stations (III) soient décalés d'un angle α/2 par rapport à ceux déposés par l'autre station (IV).

14. Installation selon l'une quelconque des revendications 8 à 12 pour la mise en oeuvre du procédé selon l'une quelconque des revendications 4 ou 5, caractérisée par le fait qu'elle comprend une station de mesure de la hauteur H' (II) du paquet partiel suivi de deux stations d'empilage (III; VI) la première (III) étant munie de n magasins (1a, 1b) contenant des segments de tôle d'épaisseur D' et la seconde (IV) de 2n magasins (1a, 1b) contenant des segments de tôle d'épaisseur D.

15. Installation selon l'une quelconque des revendications 7 à 14; caractérisée par le fait que la station (V) comporte des moyens de mise en place de rivets d'une seule pièce constitués de morceau, de fil d'acier doux ayant un diamètre légèrement inférieur à celui des trous (15) et une longueur supérieure à l'épaisseur du paquet (3) terminé.

16. Installation selon l'une quelconque des revendications 7 à 15, caractérisée par le fait qui la station d'assemblage (VI) est une station de sertissage des rivets mis en place à la station (V) précédente comportant une presse (22) à laquelle sont associés un moule (11) coopérant avec une quille (20) afin d'effectuer le centrage du paquet de tôles (3) supporté par le disque d'empilage (6), par le fait que cette station (VI) comporte un dispositif de centrage des rivets par rapport au paquet de tôles (3), avant leur sertissage, ce dispositif étant composé de moyens élastiques agissant pur les parties supérieure et inférieure dudit paquet, et par le fait que, postérieurement au centrige des segments de tôle, respectivement des couches de segments de tôle constituant le paquet, simultanément, par l'intérieur du paquet, au moyen de la quille (20), par l'extérieur du paquet au moyen du moule (11), la quille et le moule, mus par la presse (22), épousant étroitement respectivement la périphérie interne et la périphérie externe du paquet, des pointes de sertissage (23), agissant sur chaque extrémité des rivets, expansant ceux-ci dans leurs trous (15) et confectionnent les têtes de retenue de chaque rivet afin de rigidifier définitivement le paquet.

## Patentansprüche

1. Verfahren zur Herstellung von Paketen ringförmiger magnetischer oder anderer Bleche für kleine oder mittlere elektrische Maschinen, insbesondere Wechselstromgeneratoren für Motorfahrzeuge, wobei von gestanzten Blechen ausgegangen wird und die folgenden Schritte ausgeführt werden : Man schneidet durch Stanzen bogenförmige Blechsegmente (3) mit einer Umfangslänge, welche einem Winkel $\alpha = 360°/n$ entspricht, wobei n eine ganze positive Zahl grösser oder gleich 2 ist; man bewegt aus einigen Magazinen (1a, 1b), welche regelmässig um eine Stapelscheibe (6) verteilt sind, Blechsegmente (3) mit Hilfe eines Transportorgans (4a, 4b) in eine justierte Stellung vertikal über der erwähnten Stapelscheibe (6), die mit Führungsstiften (7) versehen ist, und man lässt diese Blechsegmente (3) auf die erwähnte Stapelscheibe (6) herunterfallen, wo n Blechsegmente (3) sich zu einem geschlossenen Ring ergänzen; nachdem wenigstens eine Lage von Blechsegmenten auf die Stapelscheibe (6) gelangt ist, wird wenigstens die folgende Lage auf dem Stapel winkelmässig versetzt derart angeordnet, dass diese Lage relativ zur ersten Lage um einen von $\alpha$ verschiedenen Winkel gedreht ist, wobei gegebenenfalls diese Versetzung der Anordnung aufeinanderfolgender Lagen von Blechsegmenten mehrere Male wiederholt wird, so dass verschiedene Ueberlagerungen der individuellen Blechsegmentlagen entstehen; nachdem so viele Lagen von Blechsegmenten (3) aufeinandergeschichtet wurden, wie es zum Erreichen der erforderlichen Blechpakethöhe notwendig ist, werden die Blechsegmente des Pakets bzw. die Blechsegmentlagen ausgerichtet, gepresst und miteinander befestigt, gekennzeichnet durch die Kombination folgender Phasen :

a) die erwähnten Bleche haben nach innen offene Schlitze mit einer Verengung an ihrem Eingang, und sie sind durch radial nach innen gerichtete Arme (3b) gebildet, die sich an ihren Enden verbreitern,

b) ausgehend von wenigstens n Magazinen (1a, 1b), die regelmässig um eine über der Stapelscheibe (6) angeordneten Justierplatte (2) verteilt sind, werden n Blechsegmente (3) mit Hilfe von Transportplatten (4a, 4b), welche die erwähnten Transportorgane bilden und sich radial gegen die Justierplatte (2) verschieben, zugeführt und in der justierten Stellung durch Halteorgane (5) gehalten,

c) man zieht die Transportplatten (4a, 4b) zurück, woraufhin die von den Halteorganen (5) zurückgehaltenen Blechsegmente nach ihrer Freigabe durch die Transportplatten (4a, 4b) vertikal auf die Stapelscheibe (6) fallen, wobei die Führungsstifte (7) in wenigstens zwei Schlitze jedes Blechsegments eingreifen,

d) nachdem die Blechsegmente ausgerichtet worden sind, welche das die erforderliche Höhe aufweisende Blechpaket bilden, in welchem die erwähnte winkelmässige Versetzung der Blechsegmentlagen vorzugsweise um einen Winkel $\alpha/2$ oder ein ungerades Vielfaches dieses Winkels $\alpha/2$ durchgeführt wurde, werden die Blechsegmente gleichzeitig auf der Paketinnenseite und der Paketaussenseite zentriert,

e) die Lagen des Pakets werden durch Zusammendrücken unter einer Presse befestigt, welche Niete, die aus Stücken eines Drahts aus weichem Stahl bestehen, im Innern ihrer dafür vorgesehenen Oeffnungen durch Stauchen expandiert, um das Paket derart zu versteifen, dass die Abmessungen des durch die erwähnten Niete definitiv verfestigten Pakets ohne Nachbearbeitung exakt den vorbestimmten Paketabmessungen entsprechen.

2. Verfahren nach Anspruch 1, dadurch Bekennzeichnet, dass die erwähnte, um einen Winkel $\alpha/2$ versetzte Anordnung der Blechsegmentlagen durch abwechselnden Vorschub zweier Gruppen von je n Transportplatten (4a, 4b) erhalten wird, wobei die n Platten jeder Gruppe regelmässig um die Justierplatte (2) verteilt angeordnet und jeweils mit denen der anderen Gruppe ineinandergeschachtelt sind und die 2n Transportplatten (4a, 4b) aus 2n entsprechenden Magazinen (1a, 1b) mit Blechsegmenten versorgt werden.

3. Verfahren nach den Ansprüchen 1 oder 2, dadurch gekennzeichnet, dass die Stapelscheibe (6) zwischen der ersten und der letzten Lage der Blechsegmente wenigstens n Mal um einen Winkel gedreht wird, wobei jede Drehbewegung nach einer vorgegebenen Anzahl von aufeinandergestapelten Lagen stattfindet.

4. Verfahren nach einem der Ansprüche 1 bis 3, dadurch gekennzeichnet, dass zur Bildung eines Blechpakets der Höhe H, deren Wert innerhalb der vorgeschriebenen Toleranzen liegt, Blechsegmentlagen der Dicke $D = Do \pm x$ (wobei Do die vorgeschriebene theoretische Dicke und x die möglichen Toleranzen bedeuten) zu einem Teilpaket der Höhe H' geschichtet werden, die ungefähr 80 bis 95 % der vorgeschriebenen Höhe H darstellt, dass dann die Höhe H' gemessen wird und, als Funktion der Differenz zwischen der gemessenen Höhe H' und der vorgeschriebenen Höhe H, entweder der Stapel durch wenigstens eine Blechsegmentlage mit der Dicke D' kleiner als D bis zu einer Höhe von ungefähr (H-D) ergänzt und dann durch eine Lage auf die vorgeschriebene Höhe H vervollständigt wird, wenn H' nicht schon näherungsweise den Wert (H-D) erreicht hat, oder der Stapel mit einer oder mehreren Blechsegmentlagen der Dicke D' kleiner als D bis zur vorgeschriebenen Höhe H vervollständigt wird.

5. Verfahren nach Anspruch 4, dadurch gekennzeichnet, dass ein Teilpaket aus einer Zahl von Blechsegmentlagen der Dicke D derart gebildet wird, dass die Differenz zwischen der vorgeschriebenen Höhe H und der Summe aller positiven maximalen Toleranzen der Dicke der Blechsegmente im ungünstigsten Falle höchstens gleich D ist.

6. Verfahren nach Anspruch 5, dadurch gekennzeichnet, dass zur Bildung eines Blechpakets mit der vorgeschriebenen Höhe $H = m \cdot D$ o für den Fall, dass $D = 0,8$ bis $1,2$ mm, vorzugsweise $1$ mm, $x = 5$ % und $m = 15$ bis $25$ ist, zunächst ein Teilpaket mit $(m-2)$ Blechsegmentlagen gebildet und dann Blechsegmente mit einer Dicke kleiner als D', die eine Dicke von ungefähr $0,7$ bis $0,8$ mm haben, verwendet werden.

7. Anlage zur Durchführung des Verfahrens nach Anspruch 1, dadurch gekennzeichnet, dass sie wenigstens eine Stapelstation (I) und eine Station (VI) zum Paketieren durch Nieten aufweist und dass die Stapelstation (I) folgende Teile aufweist: wenigstens n Magazine (1a, 1b), die mit Blechsegmenten (3) gefüllt und regelmässig um eine Justierungsplatte (2) verteilt sind, deren Durchmesser dem Innendurchmesser des zu vervollständigenden Rings entspricht, n Transportplatten (4a; 4b) zum Bewegen von n Blechsegmenten (3) aus den n Magazinen (1a, 1b) gegen die Justierungsplatte (2), welche mit n Halteorganen (5) für die erwähnten Segmente versehen ist, eine Stapelscheibe (6), die unter der erwähnten Justierplatte (2) angeordnet und mit Führungsstiften (7) versehen ist, von denen wenigstens zwei je Blechsegment (3) in entsprechende Schlitze der Segmente (3) eingreifen, wenn diese nach dem Zurückziehen der Transportplatten (4a; 4b) herabfallen, und Mittel, um zwischen zwei aufeinanderfolgenden Blechsegmentlagen eine winkelmässige Versetzung herzustellen.

8. Anlage nach Anspruch 7, dadurch gekennzeichnet, dass jedes der Halteorgane (5), die abnehmbar an der Justierungsplatte (2) montiert sind, einen Körper (5a) aufweist, der radial in Bezug auf die erwähnte Justierungsplatte (2) vorspringt und aus zwei Teilen besteht, nämlich einem ersten Teil (5'a), welches näher am Umfang der Justierungsplatte (2) liegt, eine näherungsweise prismatische Form hat und dessen Breite kleiner als der Umfangsabstand zwischen den verbreiterten Enden zweier aufeinanderfolgender Arme (3b) eines Segments (3) ist, und einem zweiten Teil (5"a), welches sich radial an das erste anschliesst, eine prismatische oder zylindrische Gestalt hat und dessen Breite bzw. Durchmesser grösser als der Abstand zwischen den verbreiterten Enden zweier Arme eines Segments (3) und kleiner als die Breite eines Schlitzes (3a) ist, wobei die Oberseite des zweiten Teils (5"a) derart geneigt ist, dass sein am höchsten liegender Bereich mit der Oberseite des ersten Teils (5'a) einen Absatz bildet und der am tiefsten liegende Bereich der geneigten Oberseite sich seitlich von der und näherungsweise auf gleicher Höhe wie die Oberfläche der Transportplatte (4a; 4b) befindet, welche ein Blechsegment (3) zuführt, und dass die Frontwand des Endes der Transportplatte (4a; 4b) mit einer Ausnehmung (10) versehen ist, deren Form der des vorspringenden Körpers (5a) des Halteorgans entspricht und grössere Abmessungen als die des erwähnten Körpers (5a) hat.

9. Anlage nach Anspruch 8, dadurch gekennzeichnet, dass das Ende (8) jeder ein Blechsegment tragenden Transportplatte (4a; 4b) einen stufenförmigen Absatz in Form eines Ringsegments hat, dessen Höhe gleich der Dicke eines Blechringsegments (3) ist.

10. Anlage nach Anspruch 8, dadurch gekennzeichnet, dass das Halteorgan (5) ausserdem ein Element (13) aufweist, welches auf das von einer Transportplatte (4a; 4b) zugeführte Blechsegment (3) unter der Wirkung eines elastischen Elements einen Vertikaldruck ausübt, um das Blechsegment (3) am Halteorgan (5) zu halten.

11. Anlage nach einem der Ansprüche 8 bis 10 zur Durchführung des Verfahrens nach Anspruch 1, dadurch gekennzeichnet, dass die Mittel, die eine winkelmässige. Versetzung zwischen zwei aufeinanderfolgenden Lagen bewirken, 2n Magazine (1a, 1b) aufweisen, die regelmässig um die Justierungsplatte (2) verteilt sind und denen 2n Transportplatten (4a, 4b) und 2n Haltevorrichtungen (5) zugeordnet sind, wobei von den zwei aufeinanderfolgende versetzte Lagen bildenden Blechsegmenten die Blechsegmente der ersten Lage von n regelmässig um die Justierungsplatte (2) verteilten ersten Magazinen (1a) und die Blechsegmente der folgenden Lage von den n übrigen Magazinen (1b) zugeführt werden.

12. Anlage nach einem der Ansprüche 8 bis 11 zur Durchführung des Verfahrens nach Anspruch 3, dadurch gekennzeichnet, dass die Stapelscheibe (6) mit Mitteln versehen ist, welche sie während der Bildung eines Blechpakets wenigstens n Mal um einen Winkel $\alpha$ dreht.

13. Anlage nach einem der Ansprüche 8 bis 12 zur Durchführung des Verfahrens nach einem der Ansprüche 4 oder 5, dadurch gekennzeichnet, dass sie eine Station (II) zur Messung der Höhe H' des Teilpakets aufweist, welcher zwei Stapelstationen (III; IV) nachgeschaltet sind, von denen jede mit n Magazinen (1a, 1b) ausgerüstet ist, wobei die Magazine der ersten Stapelstation (III) mit Blechsegmenten der Dicke D' und die der zweiten Stapelstation (IV) mit Blechsegmenten der Dicke D gefüllt sind, und dass die Magazine (1a, 1b) sowie die Transportplatten (4a, 4b) der Stapelstationen (III; IV), die hinter der Meßstation (II) liegen, derart angeordnet sind, dass die Segmente (3) einer durch eine der Stationen (III) abgelegten Lage um einen Winkel α/2 in Bezug auf die durch die andere Station (IV) abgelegten Lage versetzt sind.

14. Anlage nach einem der Ansprüche 8 bis 12 zur Durchführung des Verfahrens nach einem der Ansprüche 4 oder 5, dadurch gekennzeichnet, dass sie eine Station (II) zur Messung der Höhe H' des Teilpakets aufweist, welcher zwei Stapelstationen (III; IV) nachgeschaltet sind, von denen die erste (III) mit n Magazinen (1a, 1b), welche Blechsegmente der Dicke D' enthalten, und die zweite (IV) mit 2n Magazinen (1a, 1b) ausgerüstet ist, welche Blechsegmente der Dicke D enthalten.

15. Anlage nach einem der Ansprüche 7 bis 14, dadurch gekennzeichnet, dass die Station (V) Mittel zum Einsetzen der von einem einzigen Teil stammenden Niete aufweist, die aus Stücken eines Drahts aus weichem Stahl bestehen, welche einen Durchmesser, der kleiner als der der Löcher (15) ist, und eine Länge aufweisen, die grösser als die Dicke des fertigen Pakets ist.

16. Anlage nach einem der Ansprüche 7 bis 15, dadurch gekennzeichnet, dass die Paketierungsstation (VI) eine Station zum Befestigen der an der vorhergehenden Station (V) eingesetzten Niete ist und eine Presse (22) aufweist, welcher eine mit einem Stempel (20) zusammenwirkende Form (11) zugeordnet ist, um die Zentrierung des auf der Stapelscheibe (6) liegenden Blechpakets (3) durchzuführen, dass diese Station (VI) eine Vorrichtung zur Zentrierung der Niete in Bezug auf das Paket der Bleche (3) vor deren Befestigung aufweist und diese Vorrichtung mit elastischen Mitteln versehen ist, die auf den oberen Bereich und den unteren Bereich des erwähnten Pakets wirken, und dass, nachdem die Blechsegmente bzw. die das Paket bildenden Blechsegmentlagen gleichzeitig auf der Innenseite des Pakets mit Hilfe des sich am Innenumfang des Pakets anschmiegenden Stempels (20) und auf der Aussenseite des Pakets mit Hilfe der sich am Aussenumfang des Pakets anschmiegenden Form (11) zentriert wurden, wobei der Stempel und die Form durch die Presse (22) bewegt wurden, auf beide Enden der Niete wirkende Montagestifte (23) diese Niete in ihren Löchern (15) verbreitern und Nietköpfe erzeugen, um das Paket definitiv zu versteifen.

## Claims

1. Method for the manufacture of piles of magnetic or other metal sheets of annular shape, for small and medium-sized electrical machines, in particular alternators for vehicles comprising a motor, from stamped metal sheets, by carrying out the following stages : annular segments (3) of sheet metal are cut out by stamping, the segments having a peripheral length corresponding to an angle α = 360°/n, n being a positive whole number greater than or equal to 2, from some magazines (1a, 1b) distributed around a stacking disc (6), sheet metal segments are brought radially by means of a conveyor member (4a, 4b), in a fitted position vertically above the said stacking disc (6) provided with guide rods (7) and the segments (3) of sheet metal are left to drop on the said stacking disc (6), where n segments (3) of sheet metal complement each other to a closed ring, the stacking disc (6) having received at least one layer of sheet metal segments, at least the following layer of sheet metal segment is deposited on the pile with an angular stagger corresponding to an angle that is different from α relative to the first layer deposited, if necessary, this staggering of the arrangement of successive layers of sheet metal layers is repeated several times in order to obtain different superimpositions of the individual layers of sheet metal segments, after having stacked as many layers of sheet metal segments (3) as is necessary in order to obtain the desired height of the pile of plates, the sheet metal segments of the pile, respectively the layers of sheet metal segments, are aligned, they are pressed and they are fixed together, characterized by the combination of the following stages :

a) the said metal sheets comprise slots open towards the inside, having a narrow part at their inlet and which are formed by arms (3b) directed radially inwards growing thicker at their end,

b) from at least n magazines (1a, 1b) distributed uniformly around a fitting plate (2) situated above the stacking disc (6), n sheet metal segments are brought radially by means of conveyor plates (4a,4b) forming the said conveyor member and moving radially against the fitting plate (2), the segments being held in a fitted position by retaining members (5),

c) the conveyor plates (4a, 4b), are withdrawn, and the sheet metal segments retained by the retaining members (5), after their unloading from the conveyor plates (4a, 4b), thus drop vertically onto a stacking disc (6) the guide rods (7) engage in at least two slots of each sheet metal segment,

d) after having aligned the segments forming the pile of metal sheets of desired height in which the said angular stagger of segment layers are made preferably to an angle of α/2 or an uneven multiple of this angle α/2, the segments are centered simultaneously from the inside and from the outside of the pile,

e) the layers of the pile are fixed together by setting under press, which expands rivets, constituted by pieces of soft steel wire, inside their housing, in order to make the pile rigid so that the dimensions of the pile made permanently rigid by the said rivets are exactly in accordance with the predetermined dimensions of the pile without subsequent machining.

2. Method according to claim 1, characterised in that the said staggered arrangement of the layers of segments of sheet metal staggered by an angle $\alpha/2$ is obtained by the alternate advance of two groups of n conveyor plates (4a, 4b) each, the n plates of each group being uniformly arranged around the fitting plate (2) and interposed with respect to the other group, the 2n conveyor plates (4a, 4b) being supplied by 2n corresponding magazines (1a, 1b).

3. Method according to claim 1 or 2 characterised in that the stacking disc (6) between the first and last layer of segments is turned through an angle $\alpha$ at least n times, each rotation taking place after a predetermined number of layers is stacked.

4. Method according to any of claims 1 to 3 characterised in that in order to form a pile of plates of height H, whereof the value should be within prescribed tolerances, layers of segments of sheet metal of a thickness $D = Do \pm x$ (where Do is the prescribed theoretical thickness and x represents the possible tolerances) are stacked in a partial pile of a heigt H′ representing approximately 80 to 95 % of the prescribed height H, then the height H′ is measured and depending on the difference existing between the measured height H′ and the prescribed height H, either the pile is completed with at least one layer of segments of sheet metal of thickness D′ less than D up to a height of approximately (H-D), then it is completed by a layer up to the prescribed height H, if H′ has not already reached the value (H-D) approximately, or the pile is completed with one or more layers of segments of sheet metal of thickness D′ less than D up to the prescribed height H.

5. Method according to claim 4, characterised in that a partial pile is formed of a number of layers of segments of sheet metal of thickness D such that the difference between the prescribed height H and the sum of all the maximum positive tolerances of the thickness of the segments of sheet metal is, in the most unfavourable case, at the most equal to D.

6. Method according to claim 5, characterised in that for the formation of a pile of plates of prescribed height $H = m.Do$, in the case where $D = 0.8$ to $1.2$ mm, preferably 1 mm, $x = 5$ % and $m = 15$ to $25$, one first of all forms a partial pile of (m-2) layers of segments of sheet metal and that one uses segments of sheet metal of less thickness D′ having a thickness of approximately 0.7 to 0.8 mm.

7. Installation for carrying out the method according to claim 1, characterised by the fact that it comprises at least one stacking station (I) and a station (VI) for assembly by riveting, and that the stacking station (I) comprises: at least n magazines (1a, 1b) filled with segments (3) of sheet metal and uniformly distributed around a fitting plate (2) whereof the diameter corresponds to the inner diameter of the ring to be completed, n conveyor plates (4a, 4b) for bringing n segments (3) of sheet metal from n magazines (1a,1b)

against the fitting plate (2) which is provided with n members (5) for retaining said segments, a stacking disc (6) located below said fitting plate (2) provided with guide rods (7), at least two per segments (3) of sheet metal, engaging in corresponding slots in the segments (3) as they drop after the withdrawal of the conveyor plates (4a, 4b) and means for ensuring the angular stagger between two consecutive layers of segments of sheet metal.

8. Installation according to claim 7, characterised by the fact that each of the retaining members (5), fixed on the fining plate (2) where they are mounted in a removable manner, comprises a body (5a) projecting radially with respect to the said plate (2), said body (5a) being constituted by two parts, a first part (5′a) which is closer to the periphery of the fining plate (2), of approximately prismatic shape and whereof the width is less than the peripheral distance between the thickened ends of two consecutive arms (3b) of a segment (3), and a second part (5″a) extending radially following the first, of prismatic or cylindrical shape and whereof the width, respectively the diameter, is greater than the distance between the thickened ends of two arms of a segment (3) and less than the width of a slot (3a), the upper face of the second part (5″a) being inclined so that its higher part forms a recess with the upper face of the firts part (5′a), and the lower part of the inclined face is located adjacent to and approximately at the same height as the surface of the conveyor plate (4a, 4b) supplying a segment (3) of sheet metal, and that the front wall of the end of the conveyor plate (4a, 4b) is provided with a notch (10) of a chape corresponding to that of the projecting body (5a) of the retaining member and of greater dimensions than those of said body (5a).

9. Installation according to claim 8, characterised by the fact that the end (8) of each conveyor plate (4a, 4b) supporting a segment (3) of sheet metal is in the shape of a segment of a ring formed in a recess whereof the height is equal to the thickness of sheet metal ring segment (3).

10. Installation according to claim 8 characterised by the fact that the retaining member (5) also comprises a member (13) exerting a vertical pressure under the action of a resilient member on the sheet metal segment (3) supplied by a conveyor plate (4a, 4b) in order to ensure that the sheet metal segment is held by the retaining member (5).

11. Installation according to any of claims 8 to 10 for carrying out the method according to claim 1, characterised by the fact that the means ensuring the angular stagger between two successive layers are composed of 2n magazines (1a, 1b) uniformly distributed around the fitting plate (2), associated with which magazines are 2n conveyor plates (4a, 4b) and 2n retaining devices (5), the sheet metal segments forming two staggered successive layers are supplied for the first layer from n first magazines (1a) uniformly

distributed around the fitting plate (2), and for the following layers by the n remaining magazines (1b).

12. Installation according to any of claims 8 to 11, for carrying out the method according to claim 3, characterised by the fact that the stacking disc (6) is provided with means which cause it to rotate by an angle α at least n times when a pile of plates is being formed.

13. Installation according to any of claims 8 to 12, for carrying out the method according to any of claims 4 or 5, characterised by the fact that it comprises a station (II) for measuring the height H' of the partial pile, followed by two stacking stations (III, IV) each being provided by n magazines (1a, 1b), the magazines of the first of the stations (III) being filled with sheet metal segments having a thickness D' and those of the second station (IV) with segments of thickness D, and by the fact that the magazines (1a, 1b) and the conveyor plates (4a, 4b) of the stacking stations (III, IV) located after the measuring station (II) are arranged so that the segment (3) of a layer deposited by one the stations (III) are staggered by an angle α/2 with respect to those deposited by the other station (IV).

14. Installation according to any of claims 8 to 12, for carrying out the method according to any of claims 4 or 5, characterised by the fact that it comprises a station (II) for measuring the height H' of the partial pile, followed by two stacking stations (III, IV),the first (III) being provided with n magazines (1a, 1b) containing sheet metal segments of thickness D', and the second (IV) with 2n magazines (1a, 1b) containing sheet metal segments of thickness D.

15. Installation according to any of claims 7 to 14, characterised by the fact that the station (V) comprises means for fitting rivets of a single piece constituted by pieces of soft steel wire having a diameter slightly less than that of the holes (15) and a length greater than the thickness of the finished pile.

16. Installation according to any of claims 7 to 15, characterised by the fact that the assembly station (VI) is a station for setting rivets fitted at the preceding station (V), comprising a press (22), with which are associated a mould (11) co-operating with a plug (20) in order to effect centering of the pile of sheets supported by the stacking disc (6), by the fact that this station (VI) comprises a device for centering of the rivets with respect to the pile of sheets before their setting, this device being composed of resilient means acting on the upper and lower parts of the said pile, and by the fact that after the centering of the sheet metal segments respectively of the layers of sheet metal segments constituting the pile, simultaneously, from the inside of the pile by means of the plug (20), and from the outside 5 of the pile by means of the mould (11), the plug and the mould, moved by the press (22), closely following respectively the inner periphery and the outer periphery of the pile, setting points (23), acting on each end of the rivets, expand the latter 10 in their holes (15) and make the heads for retaining each rivet, in order to make the pile definitively rigid.

**Fig.1**

I

II → III → IV →

V → VI

14

**Fig.2**

**Fig.4**

Fig. 3

# Fig.5

10

8

Va

Va

4a

# Fig. 5a

12

9

10

4a

## Fig.6

## Fig.6a

**Fig.7**

**Fig. 7a**

## Fig.8